# EUROPÄISCHE PATENTSCHRIFT

(11) **EP 2 714 435 B1**
(45) Veröffentlichungstag und Bekanntmachung des Hinweises auf die Patenterteilung: **28.03.2018**
(21) Anmeldenummer: 12720810.6
(22) Anmeldetag: 11.05.2012
(51) Int. Cl.: B60C 27/02, B60C 27/08

(54) **KETTENGLIED MIT SPIKES FÜR GLEITSCHUTZKETTEN , SOWIE GLEITSCHUTZKETTE UMFASSEND SOLCHE KETTENGLIEDER**
CHAIN LINK WITH STUDS FOR ANTI-SKID CHAINS AND ANTI-SKID CHAIN COMPRISING SUCH LINKS
MAILLON AVEC DES CRAMPONS POUR CHAINE ANTIDERAPANTE ET CHAINE ANTIDERAPANTE QUI UTILISE CEUX-CI

(30) Priorität: 31.05.2011 DE 102011102879
(43) Veröffentlichungstag der Anmeldung: 09.04.2014
(73) Patentinhaber: pewag Schneeketten GmbH, 9371 Brückl (AT)
(72) Erfinder: SCHMID, Karl, A-9371 Brückl (AT); PENGG, Ägyd, A-9020 Klagenfurt (AT)
(74) Vertreter: Patentanwälte Geyer, Fehners & Partner mbB
(86) Internationale Anmeldenummer: PCT/EP2012/002039
(87) Internationale Veröffentlichungsnummer: WO 2012/163473

(56) Entgegenhaltungen:
- WO-A1-2006/135249
- US-A- 1 651 439
- US-A- 2 538 046
- US-A- 2 784 760

## Beschreibung

Die Erfindung bezieht sich auf ein Kettenglied für Gleitschutzketten für Fahrzeugreifen, mit einer Unterseite zur Auflage auf einer Reifenlauffläche eines Fahrzeugreifens und mit einer Oberseite, auf der zur Verbesserung der Greifeigenschaften, insbesondere auf glatter Unterlage, mindestens zwei Spikes vom Kettenglied vorstehen, die seitlich und in Längsrichtung desselben zueinander versetzt angeordnet sind. Die Erfindung betrifft ferner eine Gleitschutzkette für Fahrzeugreifen, die solche Kettenglieder umfaßt.

Es ist schon seit langer Zeit bekannt, Kettenglieder für Gleitschutzketten für Fahrzeugreifen zur Verbesserung der Greifeigenschaften, insbesondere auf glatter Unterlage (wie Schnee oder Eis), mit Spikes zu versehen, die auf eine Seite des Kettengliedes hin vorstehen, wobei bei auf einem Fahrzeugreifen montierter Gleitschutzkette mit solchen Kettengliedern diese sich auf der Reifenlauffläche abstützen und die angebrachten Spikes von den Kettengliedern in Richtung von der Reifenlauffläche weg vorstehen (US 2 184 127 A, US 2 223 942 A, US 4 361 178 A).

Dabei wurden in der Vergangenheit meistens Spikes mit einem kreisförmigen Querschnitt eingesetzt, sei es, daß die Spikes an den einzelnen Kettengliedern angebracht (US 4 403 639 A, US 4 361 178 A) oder daß sie in Verbindungsgliedern von Kettenstrangabschnitten des Laufnetzes vorgesehen sind (EP 0 298 905 A1). Die in solchen Gleitschutzketten verwendeten Spikes setzen dabei die Verschleißbelastung der Kettenstrangabschnitte des Laufnetzes herab und verbessern gleichzeitig die Gleitschutzeigenschaften der Gleitschutzkette ganz erheblich.

Allerdings zeigte es sich, daß die Spikes relativ rasch verschleißen und gleichzeitig auch an nicht-vereisten Fahrbahnoberflächen Beschädigungen auslösen können.

Bekannt sind auch Kettenglieder mit Spikes, die andere als kreisrunde Querschnitte aufweisen, so etwa rechteckige oder quadratische Querschnitte (US 2 184 127, US 2 223 942, WO 2006/135249 A1) oder auch polygonale Querschnitte wie sie in der Druckschrift WO 2006/135249 A1 offenbart werden . Diese Druckschrift zeigt ein gattungsbildendes Kettenglied. Dabei stand stets im Hintergrund eine Verbesserung der Traktionseigenschaften der mit Kettengliedern mit solchen Spikes versehenen Gleitschutzketten.

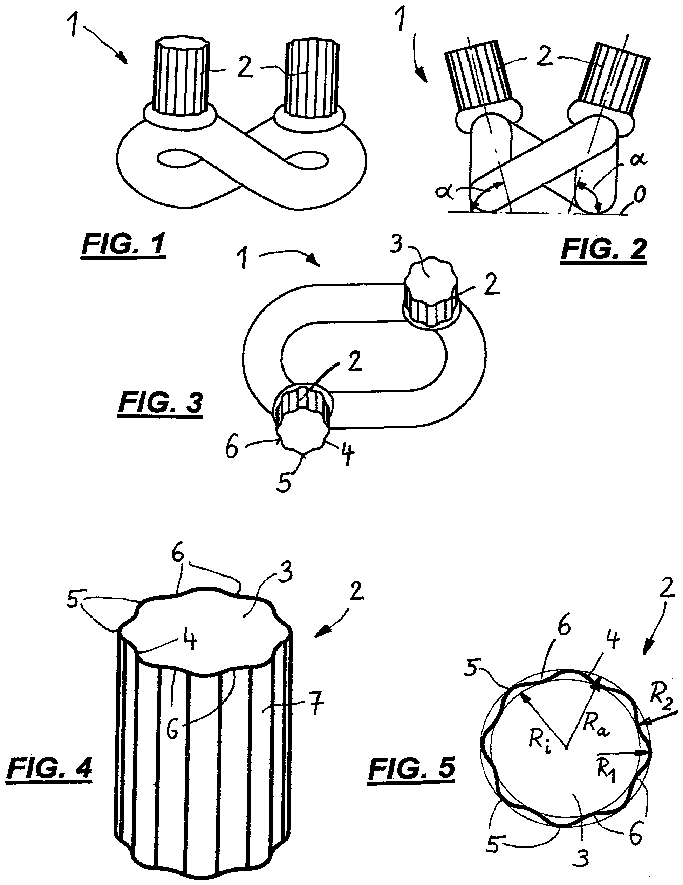

In der US 2 538 046 A wird ein aus mehreren Kettengliedern aufgebauter Querstrang einer Reifenkette beschrieben, bei dem an jedem Kettenglied ein vorstehender Spike angebracht ist, der mit einem Tragestiel zwischen den Schenkeln des Kettengliedes hindurchragt und dort angeschweißt ist. In Fig. 5 ist dabei eine Spike-Form beschrieben, bei der am Außenumfang jedes Spike-Elementes eine Ausgestaltung mit radial nach außen gerichteten kreisabschnittförmigen Wellenbergen vorgesehen ist. In den zwischen jeweils zwei nebeneinander liegenden Wellenbergen vorliegenden Tälern laufen die Kreisformen beider Wellenberge unter einem spitzen Winkel zusammen.

Auch bei den in der US 1 651 439 A gezeigten Quersträngen von Reifenketten wird an verschiedenen Kettengliedern wiederum jeweils nur ein Spike-Element angebracht. Am Außenumfang jedes Spike-Elementes sind, bei manchen der beschriebenen Ausführungsformen, radial nach außen vorspringende Kopfabschnitte vorgesehen, wobei jeweils zwischen zwei nebeneinander liegenden Kopfabschnitten ein radial zurückgesetztes Tal ausgebildet wird.

Wenn sich auch bei der Verwendung von Kettengliedern mit Spikes anderer als kreisrunder Querschnitte teilweise eine Vergrößerung der Zeit bis zum vollständigen Abrieb der Spikes erreichen ließ, ergab sich gerade bei Spikes mit scharfer Kantenausbildung, die zu einer erhöhten Gleitschutzfähigkeit der entsprechenden Radkette führten, gleichzeitig aber auch eine verstärkte Tendenz zur Beschädigung der befahrenen Fahrbahnoberflächen.

Ausgehend hiervon liegt der Erfindung die Aufgabe zugrunde, Kettenglieder mit Spikes der eingangs genannten Art vorzuschlagen, die eine noch längere Zeit bis zum vollständigen Abrieb der Spikes haben und unter Beibehaltung sehr guter Gleitschutzeigenschaften auch in verringertem Maße die Oberfläche der befahrenen Fahrbahnbeläge beschädigen.

Erfindungsgemäß wird dies bei einem Kettenglied der eingangs genannten Art dadurch erreicht, daß die Spikes so angeordnet sind, daß sie im montierten Zustand der Gleitschutzkette unter einem Winkel im Bereich von 70° bis 78° gegenüber der Reifenlauffläche geneigt sind, wobei jeder Spike senkrecht zu seiner Längserstreckung einen Querschnitt aufweist, dessen Außenrand eine wellenförmig umlaufende Formgebung aufeinander folgender Wellentäler und Wellenberge aufweist, wobei ferner mindestens sechs Wellentäler und sechs Wellenberge vorgesehen sind, und die Wellenberge in ihrem radial außen liegenden Bereich und die Wellentäler in ihrem radial innen liegenden Bereich jeweils einen im Querschnitt kreisbogenförmigen Verlauf haben, wobei diese kreisbogenförmigen Verläufe an ihren einander zugewandten Enden tangential ineinander laufen.

Das erfindungsgemäße Kettenglied mit seinem wellenförmig ausgestalteten Außenrand zeigt zunächst eine Erhöhung des Volumens der Einhärteschicht am Außenrand verglichen zu dem bei einem reinen Zylinderquerschnitt oder bei anderen Polygonquerschnitten gleich großer Querschnittsfläche und gleicher Einhärtetiefe. So haben Versuche gezeigt, daß bei Spikes mit einer stets gleichen Querschnittsfläche von 61,93 mm², einer Gesamtlänge von 15 mm und einer Einhärtetiefe von 0,46 mm im Profilquerschnitt die von der Einhärteschicht belegte Fläche bei einem kreisförmigen Querschnitt 12,17 mm², bei einem Profilquerschnitt in Form eines regelmäßigen Achtecks 12,48 mm² und bei einer Ausbildung der Spikes gemäß der Erfindung (mit einem im Prinzip kreisförmigen Querschnitt, dessen Randverlauf aber gemäß der Erfindung wellenförmig ausgebildet ist) mit acht Wellentälern und acht Wellenbergen an seinem Außenumfang 12,78 mm² beträgt, oder in anderen Worten: Das gesamte Volumen der Einhärteschicht beträgt bei einer Ausbildung des Spikes mit einem kreisförmigen Querschnitt 182,55 mm³, bei einem Querschnitt in Form eines regelmäßigen Achtecks 187,20 mm³ und bei der erfindungsgemäßen Ausbildung 191,7 mm³. Hieraus ist erkennbar, daß bei der erfindungsgemäßen Querschnittsform des Spikes eine Erhöhung des Gesamtvolumens der Einhärteschicht gegenüber einem im Querschnitt kreisförmigen Spike um 5 % und gegenüber einem Spike mit einem Querschnitt in Form eines gleichmäßigen Achtecks noch immer eine Erhöhung um 2,4 % vorliegt.

Infolge des bei der Erfindung erreichten vergrößerten Gesamtvolumens der Einhärteschicht im Randbereich, verglichen zu anderen Querschnittsformen, ergibt sich insgesamt auch eine längere nutzbare Zeit für den Abrieb des Spikes, was im praktischen Einsatzfall ein deutlicher Vorteil ist.

Durch die wellenförmig gerundete Ausgestaltung des Außenrands der Spikes bei einem erfindungsgemäßen Kettenglied ergibt sich gegenüber der Fahrbahnoberfläche, auf der ein mit einer Kette mit erfindungsgemäßen Kettengliedern versehener Fahrzeugreifen läuft, eine bemerkenswerte Bodenschonung im Vergleich zu Spikes mit Profilen mit scharfer Kantenausbildung, die gegenüber dem Fahrbahnboden erheblich aggressiver wirken.

Trotz dieser Vorteile zeigt sich, daß sich bei der Verwendung von erfindungsgemäßen Kettengliedern in Gleitschutzketten keine Abnahme der Gleitschutzfähigkeit feststellen läßt.

Bei der Erfindung lassen sich grundsätzlich Spikes mit Querschnitten einsetzen, bei denen die wellenförmig umlaufende Randgestaltung bei einer ansonsten im Prinzip Kreis- oder Ellipsen- oder auch quadratisch oder rechteckigen Querschnittsform angewendet ist.

Beim erfindungsgemäßen Kettenglied hat es sich als besonders vorteilhaft erwiesen, wenn am Außenrand jedes Spikes jeweils acht Wellenberge und acht Wellentäler vorgesehen sind. Bei dieser Ausgestaltung der Spikes lassen sich bei herkömmlichen Spikes-Größen in besonders gutem Maße die Vorteile der Erfindung erreichen.

Die Erfindung bezieht sich jedoch auch auf eine Gleitschutzkette für Fahrzeugreifen, die mit Kettengliedern der oben angegebenen erfindungsgemäßen Form versehen ist, die sich bei auf einem Fahrzeugreifen montierter Gleitschutzkette auf der Reifenlauffläche abstützen.

Die Erfindung wird nachfolgend anhand der Zeichnungen im Prinzip beispielshalber noch näher erläutert. Es zeigen:
- Fig. 1: eine perspektivische Seitenansicht eines erfindungsgemäßen Kettengliedes mit zwei Spikes für eine Gleitschutzkette;
- Fig. 2: eine perspektivische Vorderansicht des Kettengliedes aus Fig. 1;
- Fig. 3: eine Draufsicht auf das Kettenglied der Fig. 1 und 2;
- Fig. 4: eine perspektivische Darstellung eines Spikes für das Kettenglied gemäß den Fig. 1 bis 3;
- Fig. 5: eine Draufsicht auf den Spike gemäß Fig. 4;
- Fig. 6: eine Gegenüberstellung eines erfindungsgemäßen Spikes, entsprechend Fig. 4, mit Spikes zweier anderer Querschnittsformen (jeder Spike dargestellt sowohl im perspektivischer Seitenansicht wie auch in einer Querschnittsdarstellung senkrecht zu seiner Längs-Mittelachse), und
- Fig. 7: einen Kettenstrangabschnitt aus einer erfindungsgemäßen Gleitschutzkette mit Kettengliedern entsprechend den Fig. 1 bis 3.

In den Fig. 1 bis 3 ist ein Kettenglied 1 für eine Gleitschutzkette gezeigt, das sich, wenn die Kette auf der Lauffläche ***O*** (vgl. Fig. 2) eines Fahrzeugreifens (nicht gezeigt) montiert ist, mit seiner Unterseite auf der Lauffläche ***O*** abstützt, wie dies insbesondere Fig. 2 zeigt.

Das Kettenglied 1 ist ferner auf seiner der Lauffläche ***O*** abgewandten Seite mit zwei Spikes 2 versehen, die auf dem Kettenglied 1 in geeigneter Weise montiert, z. B. angeschweißt, sind. Dabei sind, in Längsrichtung des Kettengliedes 1 gesehen, die beiden Spikes 2 seitlich und in Längsrichtung zueinander versetzt, was sich am besten aus der Draufsicht auf das Kettenglied 1 gemäß Fig. 3 ergibt.

Die Spikes 2 sind so angeordnet, daß sie im montierten Zustand unter einem spitzen Winkel ***α*** zur Lauffläche ***O*** des Reifens angestellt sind, der im Bereich von 78° bis 70° liegt, bevorzugt aber 75° beträgt (vgl. Fig. 2).

In Fig. 4 ist nun einer der Spikes 2 aus den Fig. 1 bis 3 in einer perspektivischen Schrägansicht dargestellt und Fig. 5 zeigt die Form seiner Querschnittsfläche 3:

Wie aus den Fig. 4 und 5 entnehmbar ist, handelt es sich bei der Querschnittsfläche 3 des Spikes 2 um eine im Prinzip angenähert kreisförmige Formgebung, bei der jedoch der Außenrand 4 umlaufend wellenförmig gerundet mit in Umfangsrichtung jeweils aufeinander folgenden Wellenbergen 5 und Wellentälern 6 ausgebildet ist.

Die wellenförmige Ausbildung des Außenrandes 4 um den gesamten Umfang des Spikes 2 herum ist, wie die Fig. 4 und 5 anschaulich zeigen, völlig gleichmäßig ausgeführt, d. h. alle Wellenberge 5 und alle Wellentäler 6 haben umlaufend einen stets gleichen Querschnitt.

Die radial vorstehenden Enden aller Wellenberge 5 liegen dabei, wie Fig. 5 zeigt, alle auf einer äußeren Hüllkurve in Form eines Kreises mit einem Radius ***Rₐ***, während die Böden aller Wellentäler 6 auf einer im Querschnitt 3 innen liegenden Hüllkurve in Form eines Kreises mit einem Radius ***Rᵢ*** liegen.

Wie die Abbildung der Fig. 5 gleichfalls zeigt, berühren dabei, im Querschnitt 3 gesehen, die Wellenberge 5 den äußeren Kreis mit Radius ***Rₐ*** an dessen Innenseite tangential, und auch die Wellentäler 6 berühren den inneren Kreis mit Radius ***Rᵢ*** gleichfalls tangential, aber an dessen Außenseite.

Dabei haben die Krümmungen der Berge 5 in ihrem radial außen liegenden Bereich einen kreisbogenförmigen Verlauf mit einem Radius ***R₁*** und die radial innen liegenden Abschnitte der Wellentäler 6 im Querschnitt ebenfalls einen kreisbogenförmigen Verlauf mit einem Krümmungsradius ***R₂*** (vgl. Fig. 5), wobei jeweils die beiden kreisbogenförmigen Verläufe an ihren einander zugewandten Enden tangential ineinander laufen.

Bei der in den Figuren gezeigten Ausführungsform für die Spikes 2 sind am Umfang des Querschnitts 3 jeweils acht Wellenberge 5 und acht Wellentäler 6 vorgesehen. Falls gewünscht, könnten aber auch etwas weniger oder auch mehr Paare von Wellenbergen 5 und Wellentälern 6 am Außenumfang des Spike 2 ausgebildet sein.

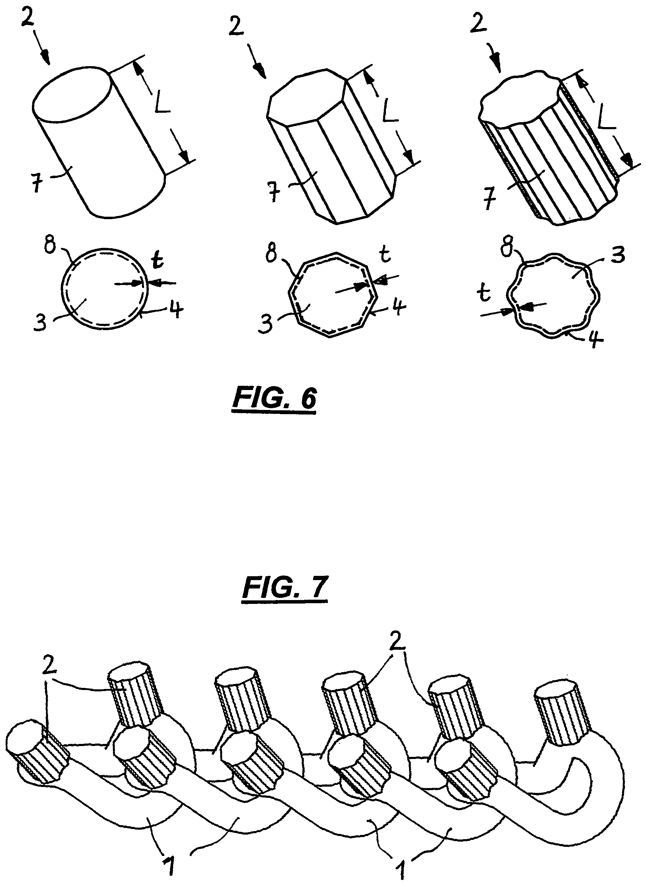

In Fig. 6 sind drei Spikes 2 unterschiedlicher Querschnittsformen 3 im Vergleich zueinander dargestellt, wobei jeweils oben eine perspektivische Schrägansicht des Spikes 2 und darunter eine Darstellung seiner Querschnittsform 3 gezeigt ist.

Die linke Abbildung zeigt einen bekannten zylindrischen Spike 2 mit kreisförmigem Querschnitt 3 und die mittlere Ausführungsform einen Spike mit einem Querschnitt 3, der ein gleichseitiges Achteck darstellt. Schließlich ist rechts ein Spike der Form nach Fig. 4 gezeigt, der einen Querschnitt 3 mit einem wellenförmig gerundet umlaufenden Rand 4 aufweist.

Alle drei in Fig. 6 gezeigten Spikes 2 haben dieselbe Länge ***L***, und auch die jeweiligen Querschnitte 3 sind gleich groß.

In Fig. 6 ist ferner in jedem unteren Querschnitt 3 der drei dargestellten Spikes 2 die Tiefe ***t*** der einsatzgehärteten Randschicht gestrichelt eingezeichnet, wobei bei den drei gezeigten Querschnitten die Tiefe ***t*** der gehärteten Randschicht gleich groß ist.

Für einen praktischen Vergleich wurden die Maße der drei gezeigten Spikes 2 aus Fig. 6 so gewählt, daß die Länge ***L*** in allen drei Fällen jeweils 15 mm und die Querschnittsfläche 3 jeweils 61,93 mm² betrug. Die Tiefe ***t*** ist in den drei dargestellten Fällen jeweils 0,46 mm.

Unter Zugrundlegung dieser Bemessungen betrug das Gesamtvolumen der gehärteten Randschicht bis zur Tiefe ***t*** beim zylindrischen Spike 182,55 mm³, beim Spike mit dem achteckigen Querschnitt 187,20 mm³ und bei dem erfindungsgemäßen Spike mit wellenförmigen Außenrand 191,7 mm³. Hieraus ergibt sich, daß das Gesamtvolumen der gehärteten Randschicht ("*Einhärteschicht*") bei dem erfindungsgemäßen Spike um 5 % größer als beim zylindrischen Spike und um noch immer 2,4 % größer als beim achteckigen Spike gleicher Querschnittsfläche ist.

Das größere Volumen der gehärteten Randschicht ergibt sich bei dem erfindungsgemäßen Spike 2 wohl daraus, daß mit der umlaufend wellenförmigen Formgebung für den Außenrand 4 des Spike-Querschnitts 3 gegenüber den bisher bekannten Querschnittsformen eine Vergrößerung der umlaufenden Mantelfläche 7 des Spikes 2 auftritt, die dann auch zu einem vergrößerten Volumen der gehärteten Randschicht 8 bis zur Tiefe ***t*** führt.

Es sei darauf hingewiesen, daß die Spikes 2 bei den in den bisherigen Figuren dargestellten Ausführungen nur jeweils ein Ausführungsbeispiel zeigen, das in vielfältiger Weise abgewandelt werden kann:

So kann die Anzahl der am Außenumfang des Randes 4 nacheinander umlaufenden Wellenberge 5 und Wellentäler 6 anstelle der in den Figuren gezeigten jeweils acht Wellenbergen 5 und Wellentälern 6 stattdessen auch z. B. nur sechs oder, bevorzugter, mehr als acht eingesetzt werden.

Dabei kann der wellenförmig umlaufende Rand 4 mit den Spitzen der Wellenberge 5 und den Böden der Wellentäler 6 nicht nur, wie im Ausführungsbeispiel gezeigt, von kreisförmigen Hüllkurven begrenzt sein, sondern es könnten auch Formen eingesetzt werden, die einem Quadrat oder einem Rechteck ähneln, wobei anstelle der geraden Seitenlinien dann wellenförmig umlaufende Seitenlinien eingesetzt werden. Gleichermaßen könnten auch Querschnitte für den Spike 2 vorgesehen werden, bei denen die äußere und innere Hüllinie für die Wellenberge 5 und die Wellentäler 6 z. B. einen elliptischen Verlauf haben.

Die Spikes 2 können ferner sowohl an Kettengliedern 1 mit ebener Aufspannfläche angebracht sein, wie auch an Kettengliedern, die aus einer Aufspannebene herausführende Formgebungen aufweisen, wie eine solche Form z. B. in den Fig. 1 bis 3 dargestellt ist.

Schließlich ist in Fig. 7 noch, in perspektivischer Darstellung, ein Kettenstrangabschnitt aus einer Gleitschutzkette gezeigt, der aus den in den Fig. 1 bis 3 gezeigten Kettengliedern 1 mit Spikes entsprechend Fig. 4 besteht.

Neben den in den Fig. 1 bis 6 gezeigten Formen für Spikes mit wellenförmig gekrümmt umlaufendem Rand 4 können auch Spikes 2 eingesetzt werden, bei denen sich die Spikes 2 von ihrem frei von den Kettengliedern 1 vorragenden Ende in Richtung auf ihre Befestigung am betreffenden Kettenglied 1 hin konisch erweitern, wobei hier jedoch eine nur sehr geringe Konizität, etwa in einer Größe von 5° zur Längsmittelachse des betreffenden Spikes 2, eingesetzt wird.

Bevorzugt werden die erfindungsgemäßen Kettenglieder 1 bei Leiterketten eingesetzt, und hier bevorzugt auf den Verbindungssträngen. Selbstverständlich können die mit Spikes 2 versehenen erfindungsgemäßen Kettenglieder 1 aber auch bei Leiterketten an den beiden Seitenketten eingesetzt werden. Weitere Einsatzgebiete sind Gleitschutzketten mit unterschiedlichen Netzformen, wie z. B. Blamann Traktor, Forstketten u. a.

## Patentansprüche

1. Kettenglied (1) für Gleitschutzketten von Fahrzeugreifen,
mit einer Unterseite zur Auflage auf einer Reifenlauffläche (O) eines Fahrzeugreifens und
mit einer Oberseite,
auf der zur Verbesserung der Greifeigenschaften, insbesondere auf glatter Unterlage, mindestens zwei Spikes (2) vom Kettenglied (1) vorstehen,
die seitlich und in Längsrichtung desselben zueinander versetzt angeordnet sind, **dadurch gekennzeichnet, daß** die Spikes (2) so angeordnet sind, daß sie im montierten Zustand der Gleitschutzkette unter einem Winkel (α) im Bereich von 70° bis 78° gegenüber der Reifenlauffläche (O) geneigt sind,
wobei jeder Spike (2) senkrecht zu seiner Längserstreckung einen Querschnitt (3) aufweist, dessen Außenrand (4) eine wellenförmig umlaufende Formgebung aufeinander folgender Wellentäler (6) und Wellenberge (5) aufweist, wobei ferner mindestens sechs Wellentäler (6) und sechs Wellenberge (5) vorgesehen sind, und die Wellenberge (5) in ihrem radial außen liegenden Bereich und die Wellentäler (6) in ihrem radial innen liegenden Bereich jeweils einen im Querschnitt kreisbogenförmigen Verlauf (R₁, R₂) haben, wobei diese kreisbogenförmigen Verläufe an ihren einander zugewandten Enden tangential ineinander laufen.

2. Kettenglied (1) nach Anspruch 1, **dadurch gekennzeichnet, daß** am Außenrand (3) jedes Spikes (2) umlaufend jeweils acht Wellenberge (5) und acht Wellentäler (6) vorgesehen sind.

3. Kettenglied (1) nach Anspruch 1 oder 2, **dadurch gekennzeichnet, daß** jeder Spike (2) sich von seinem vom Kettenglied (1) vorragenden Ende aus in Richtung auf seine Befestigung am Kettenglied (1) hin konisch erweitert.

4. Kettenglied (1) nach Anspruch 3, **dadurch gekennzeichnet, daß** die konische Erweiterung unter einem Winkel von 5° zur Längsmittelachse des betreffenden Spikes (2) verläuft.

5. Gleitschutzkette für Fahrzeugreifen, umfassend Kettenglieder (1) nach einem der Ansprüche 1 bis 4.

## Claims

1. Chain link (1) for anti-skid chains of vehicle tyres, having a lower side for bearing on a tyre tread (O) of a vehicle tyre and having an upper side on which, in order to improve the grip properties, in particular on a smooth base, at least two spikes (2) project from the chain link (1), which are arranged offset to one another laterally and in the longitudinal direction thereof, **characterized in that** the spikes (2) are arranged so that they, in the mounted state of the anti-skid chain, are inclined at an angle (α) in the range from 70° to 78° with respect to the tyre tread (O), wherein each spike (2) has, perpendicular to its longitudinal extent, a cross-section (3), the outer edge (4) of which has a wave-like circumferential design of consecutive wave troughs (6) and wave crests (5), wherein furthermore at least six wave troughs (6) and six wave crests (5) are provided, and the wave crests (5) in their radially outwardly lying region and the wave troughs (6) in their radially inwardly lying region have in each case a profile (R₁, R₂) which has a circular arc shape in cross-section, wherein these profiles with a circular arc shape run tangentially into one another at their ends which face one another.

2. Chain link (1) according to Claim 1, **characterized in that** in each case eight wave crests (5) and eight wave troughs (6) are provided circumferentially on the outer edge (3) of each spike (2).

3. Chain link (1) according to Claim 1 or 2, **characterized in that** each spike (2) expands conically from its end projecting from the chain link (1) in the direction of its fastening to the chain link (1).

4. Chain link (1) according to Claim 3, **characterized in that** the conical expansion runs at an angle of 5° to the longitudinal central axis of the relevant spike (2).

5. Anti-skid chain for vehicle tyres, comprising chain links (1) according to any one of Claims 1 to 4.

## Revendications

1. Maillon (1) pour une chaîne antidérapante de pneus de véhicules, comprenant un côté inférieur destiné à s'appliquer sur une surface de roulement de pneu (O) d'un pneu de véhicule et comprenant un côté supérieur sur lequel, pour améliorer les propriétés de prise au sol, en particulier sur un support lisse, au moins deux crampons (2) font saillie depuis le maillon (1), lesquels sont disposés de manière décalée l'un par rapport à l'autre latéralement et dans la direction longitudinale du maillon, **caractérisé en ce que** les crampons (2) sont disposés de telle sorte que dans l'état monté de la chaîne antidérapante, ils soient inclinés suivant un angle (α) de l'ordre de 70° à 78° par rapport à la surface de roulement du pneu (O), chaque crampon (2) présentant, perpendiculairement à son étendue longitudinale, une section transversale (3) dont le bord extérieur (4) présente une forme périphérique ondulée constituée d'une alternance de creux d'ondulations (6) et de sommets d'ondulations (5), au moins six creux d'ondulations (6) et six sommets d'ondulations (5) étant en outre prévus, et les sommets d'ondulations (5) présentant, dans leur région située radialement à l'extérieur, et les creux d'ondulations (6) présentant, dans leur région située radialement à l'intérieur, à chaque fois une allure en forme d'arc de cercle en section transversale (R₁, R₂), ces allures en forme d'arc de cercle se prolongeant tangentiellement les unes dans les autres au niveau de leurs extrémités tournées l'une vers l'autre.

2. Maillon (1) selon la revendication 1, **caractérisé en ce qu'**au niveau du bord extérieur (3) de chaque crampon (2) sont prévus, sur la périphérie, à chaque fois huit sommets d'ondulations (5) et huit creux d'ondulations (6).

3. Maillon (1) selon la revendication 1 ou 2, **caractérisé en ce que** chaque crampon (2) s'élargit sous forme conique depuis son extrémité faisant saillie depuis le maillon (1) dans la direction de sa fixation au maillon (1).

4. Maillon (1) selon la revendication 3, **caractérisé en ce que** l'élargissement conique s'étend suivant un angle de 5° par rapport à l'axe médian longitudinal du crampon concerné (2).

5. Chaîne antidérapante pour pneu de véhicule, comprenant des maillons (1) selon l'une quelconque des revendications 1 à 4.
